Europäisches Patentamt

European Patent Office

Office européen des brevets

(11) Veröffentlichungsnummer: **0 270 113**
**A2**

(12) **EUROPÄISCHE PATENTANMELDUNG**

(21) Anmeldenummer: 87117898.4

(22) Anmeldetag: 03.12.87

(51) Int. Cl.4: **F02B 25/12** , F02B 23/08

(30) Priorität: 05.12.86 DE 3641601

(43) Veröffentlichungstag der Anmeldung:
08.06.88 Patentblatt 88/23

(84) Benannte Vertragsstaaten:
AT BE DE ES FR GB GR IT NL SE

(71) Anmelder: Glotur Trust Reg.
Städtle 36
LI-9490 Vaduz(LI)

(72) Erfinder: August, Paul, Dr.h.c.
C/ Ballester 43
Barcelona(ES)

(74) Vertreter: Riebling, Peter, Dr.-Ing.
Patentanwalt Dr.-Ing. P. Riebling Rennerle 10
Postfach 3160
D-8990 Lindau(DE)

(54) Zweitakt-Doppelkolbenmotor.

(57) Bei einem Zweitakt-Doppelkolbenmotor läuft je ein Kolben in zwei nebeneinander liegenden Zylindern, wobei eine gemeinsame Brennkammer gebildet wird.

Damit ein solcher Motor niedrige Abgasemissionen bei geringem Verbrauch gewährleistet, wird ein Magergemisch verbrannt, dessen vollständige Verbrennung dadurch ermöglicht wird, daß in der gemeinsamen Brennkammer eine Rotation des Brennstoff-Luftgemisches bzw. des gezündeten Gemisches erzeugt wird, so daß dieses Gemisch - schnell durchbrennt.

EP 0 270 113 A2

## Zweitakt-Doppelkolbenmotor

Die Erfindung betrifft einen Zweitakt-Doppelkolbenmotor nach dem Oberbegriff des Patentanspruchs 1, wie er beispielsweise nach dem System Puch bekannt geworden ist.

Der Erfindung liegt die Aufgabe zugrunde, einen eingangs genannten Doppelkolbenmotor so weiterzubilden, daß bei erniedrigten Abgasemissionswerten noch zusätzlich der Verbrauch gesenkt werden kann.

Zur Lösung der gestellten Aufgabe ist die Erfindung dadurch gekennzeichnet, daß in der gemeinsamen Brennkammer eine Rotation des Brennstoff-Luftgemisches bzw. des gezündeten Gemisches erzeugt wird.

Mit der gegebenen technischen Lehre wird der Vorteil erzielt, daß auch Magergemische schnell durchbrennen, wodurch ein niedriger Verbrauch bei sehr geringer Abgasemission erreicht wird.

Bei einer Gemischzusammensetzung von Lambda 1,3 und höher werden die NOx so stark gesenkt, daß diese den Vorschriften entsprechen. Um ein solch mageres Gemisch einwandfrei und rasch genug durchzubrennen, ist eine starke Rotation in der Brennkammer notwendig. Nur bei einer solchen läuft der Brennvorgang so schnell ab wie bei Gemischen von Lambda 0,9 - 1,0. Dies ist notwendig, um bei guter Leistung einen sehr niedrigen Verbrauch zu erreichen.

Der Erfinder hat bereits Erfahrungen mit Viertaktmotoren mit ähnlich gestalteten Brennkammern. Hierbei wurde der Verbrauch um ca. 20% gesenkt und liegt ab 120 km/h unter 260 g/KWh. Bei Vollast beträgt er zwischen 2.000 - 5.000 l/min 240 - 245 g/KWh. Der FTP 75 (CVS) Test bei einem Fiat Ritmo 75 brachte mit dieser Brennkammer und einem Minikatalysator folgende Werte:
HC: 0,32 - CO: 2,8 - NOx: 0,71 g/mile, Verbrauch: 6,3 l/100 km = 37,1 M/GAL.

Auch hier liegt der Verbrauch extrem niedrig, im Composite-Test um 32% unter der USA-Vorschrift.

In einer bevorzugten Ausführungsform der vorliegenden Erfindung ist der Doppelkolbenmotor als Zweitaktmotor System Puch ausgebildet.

Der Doppelkolben-Zweitaktmotor System Puch hat in der Serienausführung keinen höheren Verbrauch, als ein Viertakter, da er eine Frischgasverluste bei der Ladung und außerdem unterschiedliche Steuerzeiten für Ein-und Auslaß hat.

Es werden mit einem solchen Motor gleiche Werte zu erreichen sein wie mit einem Viertakter mit einer Brennkammer mit schneller Rotation des Gasgemisches vor und während des Brennvorganges.

Der Zweitakter hat jedoch folgende Vorteile:
1. Ein ruhiger Lauf des Motors wird mit drei Zylindern anstelle sechs Zylindern beim Viertakter erreicht.
2. Die Literleistung ist höher.
3. Der Zylinderkopf ohne Ventile hat eine kleinere Bauhöhe, ist sehr einfach gebaut und ist preiswert herzustellen.

Zusammenfassend ergeben sich folgende Vorteile:
Der Motor wird für gleiche Leistung ca. 30% kleiner, leichter und preiswerter als ein entsprechender Vierzylinder-Viertakter und hat den ruhigen Rundlauf eines Viertakt-Sechszylinders.

Bei der Verwirklichung der erfindungsgemässen technischen Lehre ist es wichtig, daß in der gemeinsamen Brennkammer eine starke Rotation des Brennstoff-Luftgemisches bzw. des gezündeten Gemisches dadurch erzeugt wird, daß mit der Oberkante des einen Kolbens ein längerer Quetschspalt mit dem Zylinderkopf gebildet wird und der Zylinderkopf außerhalb dieses Quetschspaltes die Form annähernd eines Kreisbogens hat.

Der eine, den Auslaßschlitz steuernde Kolben weist also an seiner nächst dem Auslaßschlitz liegenden Seite zunächst eine schräge, gegen den Zylinderkopf gerichtete Gerade auf, die in einer (bei vertikal stehendem Motor) horizontal liegenden, sich über die gesamte Breite des Kolbens erstreckenden,Kolbenoberkante endet.

An diese kammartige Kolbenoberkante schließt sich eine Hohlkehle im Kolbenboden an, die in der oberen Totpunktlage beider Kolben mit dem benachbarten Kolbenboden des Kolbens, welcher den Überströmschlitz steuert, eine durchgehende Fläche bildet.

Diese Fläche des den Überströmschlitz steuernden Kolbens ist bevorzugt ebenfalls als Gerade ausgebildet und ist im Bereich einer Ausnehmung angeordnet, die wiederum in einer Hohlkehle mündet, die ihrerseits in eine Gerade übergeht, wobei diese Gerade Teil eines weiteren Quetschspaltes ist.

In der oberen Totpunktlage bildet also der den Ausströmschlitz steuernde Kolben eine erste, lange Quetschspalte, die zu einem raschen Ausstoß des in dieser Quetschspalte eingeschlossenen Gemisches in Richtung auf die Brennkammer führt. In der Brennkammer wird daher bedingt durch die eiförmige Formgebung der oberen Zylinderwandung eine stark rotierende Strömung erzeugt, die in allen gemischberührten Teilen abgerundete, ineinander übergehende Radien vorfindet, so daß die Rotation keine wesentlichen Strömungswiderstände vorfindet.

Diese schnell rotierende Strömung wird noch verstärkt durch den rechten, kürzeren Quetschspalt, der ebenfalls eine Quetschspaltenströmung in Richtung auf die Rotation ausstößt und hierdurch die Rotation noch beschleunigt.

Eine weitere Beschleunigung der Rotation erfolgt dadurch, daß der Zündstrahl der Zündkerze aus einem Ausströmkanal entströmt und die Richtung dieses Kanals ebenfalls in Richtung der Rotation erfolgt, so daß hierdurch wiederum die Rotationsströmung unterstützt wird.

In einer zweiten Ausführungsform der vorliegenden Erfindung ist es vorgesehen, daß statt der Anordnung der Zündkerze in einer Zündkerzenkammer mit einem davorliegenden Ausströmkanal in dem Kolben, welcher den Ausströmschlitz steuert, eine Aussparung angeordnet ist, in der die Zündkerze angeordnet ist. Der Grund dieser Aussparung ist wiederum als Gerade ausgebildet, die schräg nach oben gerichtet ist und stufenlos die obere Zylinderwandung fortsetzt. Diese Aussparung im Kolbenboden des linken Kolbens in Verbindung mit der schräg gerichteten Gerade wirkt zunächst als Quetschspalte. Darüberhinaus bewirkt aber der von der Zündkerze erzeugte Zündstrahl eine zusätzliche Beschleunigung des diesen Vorbrennraum verlassenden gezündeten Gemisches, so daß hierdurch wiederum eine starke Rotationsströmung entsteht.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1: Schnitt durch eine erste Ausführungsform eines Zweitakt-Doppelkolbenmotors im oberen Totpunkt der Kolben;

Figur 2: Schnitt durch den gleichen Motor im unteren Totpunkt der Kolben;

Figur 3: eine gegenüber Figur 1 abgewandelte Ausführungsform eines Doppelkolbenmotors.

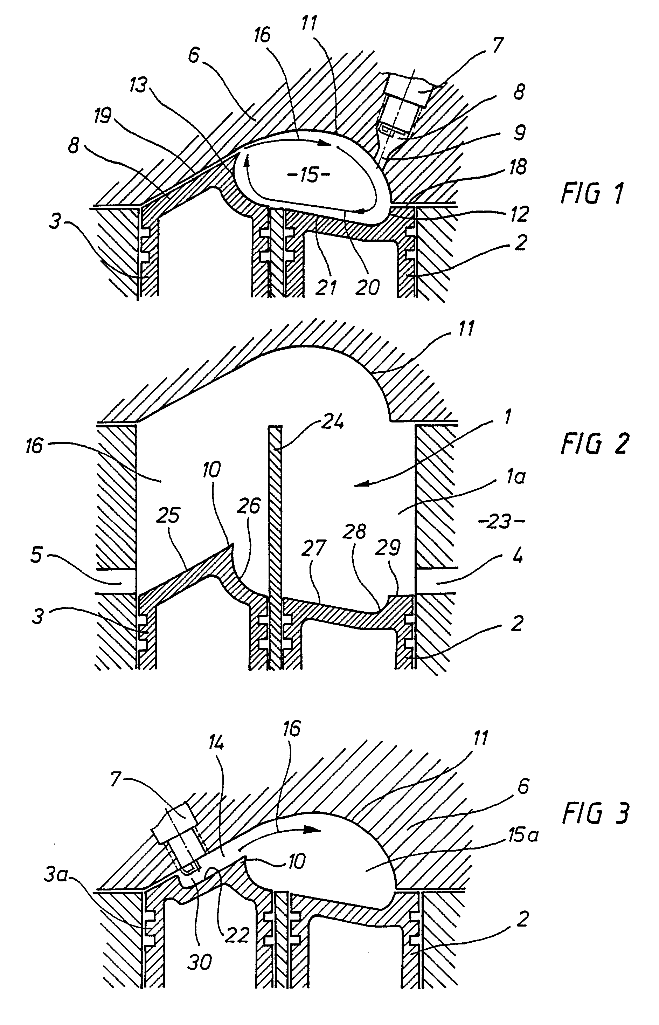

Der Zweitakt-Doppelkolbenmotor nach dem Ausführungsbeispiel besteht gemäss Figur 1 aus einem Doppelzylinder 1, in dem die Kolben 2,3 durch eine gehäusefeste Trennwand 24 laufen.

Durch den Überströmschlitz 4 wird beim Ladevorgang aus der Kurbelkammer 23 Brennstoff-Luftgemisch in den rechten Zylinder 1a gepresst. Dieses Gemisch schiebt die abgebrannten Gase des vorhergehenden Arbeitstaktes vor sich her zum Ausströmschlitz 5, der vom linken Zylinder 1b gesteuert wird. Der Ausströmschlitz 5 wird durch die bekannte Steuerung des Puch-Motors eher geöffnet als der Überströmschlitz 4.

Beim Aufwärtsgang der Kolben 2,3 schließt der Ausströmschlitz 5 eher als der Überströmschlitz 4, wodurch vermieden wird, daß Frischgase verloren gehen, was beim normalen Zweitakter der Fall ist und dort zu höherem Verbrauch führt.

Im Zylinderkopf 6 befindet sich die Zündkerze 7. Diese sitzt gem. Figur 1 in einer Vorkammer 8 mit einem sich daran anschließenden Ausströmkanal 9, wobei die Längsachse des Ausströmkanals 9 in Richtung auf die in der Brennkammer 15 erzeugte Rotation 20 des Brennstoff-Luftgemisches zeigt.

Die in der Figur 1 dargestellte Rotation wird durch folgende konstruktive Maßnahmen erreicht:

Der linke Kolben 3 weist einen schrägen Kolbenboden auf, der in der Form einer Geraden 25 - schräg nach oben gerichtet ist, wobei die Gerade 25 in der oberen Totpunktlage parallel und in geringem Abstand zur zugeordneten Geradenwandung des Zylinderkopfes 6 liegt und dadurch ein Quetschspalt 19 gebildet wird.

Die Gerade 25 am Kolbenboden des Zylinders 3 endet in einer sich in horizontaler Richtung erstreckenden, kammartigen Kolbenoberkante 10, an welche sich eine Hohlkehle 26 im Kolbenboden des Kolbens 3 anschließt.

Der den Überströmschlitz 4 steuernde Kolben 2 weist nächst der gehäusefesten Trennwand 24 ebenfalls eine Ausnehmung 27 im Kolbenboden auf, deren Grund als Gerade 21 ausgebildet ist.

Diese Gerade 21 ist schräg nach unten gerichtet und setzt stetig die Kontur der Hohlkehle 26 des linken Kolbens 3 fort.

Am Grund der Ausnehmung 27 ist eine Hohlkehle 28 im Kolben 2 eingearbeitet, die einen Kolbenbogen 12 ausbildet, der seinerseits in eine Gerade 29 einläuft. Die Gerade 29 in Verbindung mit einer zugeordneten oberen Zylinderkopfwandung bildet einen zweiten, kürzeren Quetschspalt 18.

Nähern sich die Kolben 2 und 3 dem oberen Totpunkt, so entsteht zwischen der Kolbenoberkante 10 und dem Zylinderkopf 6 ein Quetschspalt 19, aus dem mit sehr hohem Druck das Gasgemisch in Richtung 16 ausströmt und in der Brennkammer 15 eine Rotationsströmung erzeugt. Die Rotation wird erzeugt durch die Form des Zylinderbogens 11: des Kolbenbogens 12 und des Umlenkbogens 13. Sie wird außerdem in der Strömung gefördert durch austretende Gase aus dem Quetschspalt 18. Eine weitere Förderung in Strömungsrichtung wird durch das ausströmende Brenngas aus der Zündkerzenkammer 8 über den Ausströmkanal 9 bewirkt.

Das Ausführungsbeispiel nach Figur 3 unterscheidet sich von dem nach den Figuren 1 und 2 nur dadurch, daß im linken Kolben 3 eine Aussparung 30 angeordnet ist, deren Grund als Gerade 22 ausgebildet ist, die wiederum etwa parallel zu der oberen, gerade ausgeführten Zylinderkopfwandung des Zylinderkopfes 6 ist. Hierdurch wird ein Vorbrennraum 14 für eine im Zylinderkopf 6 angeordnete Zündkerze 7 gebildet.

Bei der Zündung brennt zuerst das Gemisch in der Vorbrennkammer 14 und strömt mit hohem Druck und Geschwindigkeit in Richtung 16 in den Hauptbrennraum 15a, wo auf diese Weise ebenfalls eine Rotation entsteht.

Durch die angeführten Maßnahmen wird es möglich, Magergemische schnell durchzubrennen, wodurch niedriger Verbrauch bei sehr geringer Abgasemission erreicht wird. Infolge der vorher angeführten Vorteile des Zweitakt-Doppelkolbenmotors wird dies der kleinste, leichteste und preiswerteste Magerkonzeptmotor.

ZEICHNUNGS-LEGENDE

1 Doppelzylinder
1a rechter Zylinder
1b linker Zylinder
2 Kolben
3 Kolben
4 Überströmschlitz
5 Ausströmschlitz
6 Zylinderkopf
7 Zündkerze
8 Zündkerzenkammer
9 Ausströmkanal
10 Kolbenoberkante
11 Zylinderbogen
12 Kolbenbogen
13 Umlenkbogen
14 Vorbrennraum
15 Brennraum
15a Brennraum
16 Richtung
18 Quetschspalt rechts
19 Quetschspalt links
20 Rotation
21 Gerade
22 Gerade
23 Kurbelkammer
24 Trennwand
25 Gerade
26 Hohlkehle
27 Ausnehmung
28 Hohlkehle
29 Gerade
30 Aussparung

## Ansprüche

1. Zweitakt-Doppelkolbenmotor, in dem je ein Kolben in zwei nebeneinander liegenden Zylindern und einer gemeinsamen Brennkammer läuft, wobei die beiden Kolben im oberen Totpunkt mit dem Zylinderkopf eine gemeinsame Brennkammer bilden, in der eine Rotation des Brennstoff-Luftgemisches bzw. des gezündeten Gemisches erzeugt wird, **dadurch gekennzeichnet**, daß mit der Oberkante (10) des einen Kolbens (3) ein längerer Quetschspalt (19) mit dem Zylinderkopf (6) gebildet wird und der Zylinderkopf (6) außerhalb dieses Quetschspaltes die Form annähernd eines Kreisbogens (11) hat, daß im anderen Kolben (2) ein Kolbenbogen (12) ausgebildet ist. der die Verlängerung des Kreisbogens (11) darstellt und anschließend in eine Gerade (21) ausläuft, und daß der eine Kolben (3,2) den Auslaßschlitz (5) steuert und der andere Kolben (2,3) den Einlaßschlitz (4) des Motors.

2. Zweitakt-Doppelkolbenmotor nach Anspruch 1, **dadurch gekennzeichnet**, daß im einen Kolben (3) ein Umlenkbogen (13) angeordnet ist.

3. Zweitakt-Doppelkolbenmotor nach Anspruch 1 oder 2, **dadurch gekennzeichnet**, daß der Zylinderkreisbogen (11) mit dem Kolbenbogen (12), der nach oben gerichteten Geraden (21) und dem Umlenkbogen (13) des einen Kolbens (3,3a) nahezu ein Strömungsoval bilden.

4. Zweitakt-Doppelkolbenmotor nach einem der Ansprüche 1 - 3, **dadurch gekennzeichnet**, daß die Zündkerze (7) in einer Kammer (8) mit einem Ausströmkanal (9) angeordnet ist und der Ausströmkanal (9) in die Richtung der Rotationsströmung (20) zeigt.

5. Zweitakt-Doppelkolbenmotor nach einem der Ansprüche 1 - 4, **dadurch gekennzeichnet**, daß an der Oberfläche des einen Kolbens (3a) eine Aussparung (30) angeordnet ist, die im oberen Totpunkt des Kolbens mit dem Zylinderkopf (6) eine Vorbrennkammer (14) ausbildet, deren Zündstrahl die Rotationsströmung (20) in der Brennkammer (15) bewirkt.

6. Zweitakt-Doppelkolbenmotor nach Anspruch 5, **dadurch gekennzeichnet**, daß sich die Zündkerze (7) im Bereich der Vorbrennkammer (14) befindet.

0 270 113

FIG 1

FIG 2

FIG 3

G 1350